# FASCICULE DE BREVET EUROPEEN

(11) **EP 2 737 223 B1**
(45) Date de publication et mention de la délivrance du brevet: **09.09.2015**
(21) Numéro de dépôt: 12737301.7
(22) Date de dépôt: 23.07.2012
(51) Int. Cl.: F16B 41/00, F16B 21/07

(54) **AGRAFE DE FIXATION D'UNE PIÈCE SUR UN SUPPORT ET ASSEMBLAGE OBTENU**
KLAMMER ZUR BEFESTIGUNG EINER KOMPONENTE AN EINEM TRÄGER UND DADURCH ENTSTANDENE ANORDNUNG
CLIP FOR ATTACHING A COMPONENT TO A SUPPORT, AND ASSEMBLY OBTAINED

(30) Priorité: 29.07.2011 FR 1156951
(43) Date de publication de la demande: 04.06.2014
(73) Titulaire: A. Raymond et Cie, 38000 Grenoble (FR)
(72) Inventeur: ALBARAN, Jean-François, F-38760 Varces (FR); FRAYSSE, Didier, F-91600 Savigny sur Orge (FR)
(74) Mandataire: Prugneau, Philippe
(86) Numéro de dépôt international: PCT/EP2012/064388
(87) Numéro de publication internationale: WO 2013/017454

(56) Documents cités:
- US-A1- 2007 126 211
- US-A1- 2007 220 716

## Description

### Domaine technique

L'invention concerne une agrafe de fixation selon le préambule de la revendication 1. Une telle agrafe est connue du document FR 2 780 115 A1.

L'invention concerne également un assemblage d'une pièce sur un support au moyen d'une telle agrafe de fixation.

### Technique antérieure

De telles agrafes de fixation sont connues et notamment utilisées pour la fixation d'habillage intérieur pour les carrosseries automobiles. Elles permettent notamment une fixation plus simple et moins coûteuse que lors de l'utilisation de rivets. Elles sont particulièrement utiles pour les habillages recouvrant les éléments de sécurité de type airbag destinés, en cas d'accident, à se gonfler rapidement pour protéger les passager. De manière courante, l'airbag est dissimulé derrière un habillage destiné à être poussé par l'airbag se gonflant et ainsi autoriser le passage et le gonflage total de l'airbag pour protéger les passagers. Les agrafes de fixation comportent généralement un élément d'ancrage solidarisé à la carrosserie et un élément de maintien solidarisé à l'habillage, chacun comportant des formes complémentaires aptes à s'engager les unes dans les autres pour solidariser l'élément de maintien à l'élément de fixation. L'élément d'ancrage et l'élément de maintien sont reliés entre eux par une sangle. Lorsque l'airbag est déclenché et se gonfle, l'élément de fixation est désolidarisé de l'élément de maintien par la poussée de l'airbag. L'élément de fixation reste toutefois relié à l'élément de maintien par la sangle ce qui permet d'éviter que l'élément de fixation ne se transforme en projectile dangereux.

Un exemple d'agrafe de fixation est connu de la publication FR 2 780 115 A1 qui décrit une agrafe de fixation dont l'élément d'ancrage comporte une embase pourvue, sur l'une de ses faces, d'ailettes en V portées par un piler centrale et s'écartant de l'embase. Le pilier et les ailettes sont aptes à être insérés dans un orifice d'ancrage prévu au travers d'une plaque support de sorte que les extrémités libres des ailettes appuient de l'autre coté de la plaque support par rapport à l'embase et solidarisent l'élément d'ancrage au support. Sur l'autre face de l'embase, l'élément d'ancrage comporte deux parois de maintien reliées en leurs extrémités et formant un ovale transversalement élastique. L'élément de maintien se présente sous la forme d'une plaque rectangulaire traversée par un orifice de maintien dont la forme tronconique est apte à recevoir, par engagement frontal, les parois de maintien, enclipsées par déformation élastique de sorte à solidariser l'élément de maintien à l'élément d'ancrage.

La publication FR 2 905 149 décrit une agrafe de fixation sensiblement similaire se distinguant par l'orifice de maintien qui est prévu débouchant latéralement de la plaque, de sorte à autoriser, au choix, l'engagement frontal et l'engagement latéral des parois de maintien dans l'orifice.

Avec ces agrafes de fixation connues, la tenue de l'élément de maintien sur l'élément d'ancrage est difficile à régler et s'avère, à l'usage, soit trop faible, soit trop importante. De plus, l'effort à fournir pour l'engagement des formes complémentaires de l'élément de maintien et de l'élément d'ancrage est souvent important ce qui complique l'assemblage.

### Exposé de l'invention

Le but de l'invention est de remédier à ces inconvénients en proposant une agrafe de fixation facile à mettre en place, permettant d'assurer une fixation fiable de la pièce sur le support et le désengagement de la pièce selon des conditions précises, tout en retenant la pièce au support et en occupant un espace limité. Le but de l'invention est également de proposer un assemblage comportant une telle agrafe de fixation, cet assemblage étant compact et apte à résister aux sollicitations et à se déclencher en libérant un élément de l'agrafe de fixation lorsqu'un seuil prédéterminé de sollicitation est atteint.

A cet effet, l'invention a pour objet une agrafe de fixation selon la revendication 1.

L'agrafe de fixation selon l'invention est ainsi facile à réaliser et à mettre en place, par l'encliquetage simultané ou successif des deux charnières indépendantes l'une de l'autre. De plus, la résistance de l'agrafe de fixation à l'effort de désengagement peut être réglée avec précision en dimensionnant les charnières indépendamment l'une de l'autre. Ces charnières permettent d'assurer un contact surfacique entre l'élément de maintien et l'élément d'ancrage, ce contact surfacique étant facilement ajustable. Le fait d'avoir deux charnières permet en outre de maintenir une liaison pivot avec l'une des charnières lorsque l'autre charnière n'est plus ou pas encore engagée. Ceci permet plus de souplesse notamment lors du montage. De même, le désengagement peut s'opérer en deux temps, un temps pour chaque charnière ce qui peut être avantageux. Ainsi, au lieu d'être dans une situation « tout ou rien » avec désengagement et engagement, il est possible d'être dans une configuration intermédiaire dans laquelle seule l'une des charnières est engagée, l'autre désengagée.

Si l'on considère une direction principale selon laquelle les efforts d'engagement et de désengagement sont destinés à être appliqués sur l'élément de maintien, les axes des charnières sont avantageusement sensiblement perpendiculaires à cette direction principale.

L'agrafe de fixation selon l'invention peut avantageusement présenter les particularités suivantes :
- pour chaque charnière, ladite tige et ladite portée sont agencées pour, une fois l'engagement réalisé, coopérer sur au moins les trois quarts du cylindre qui les définit. Cette configuration spécifique permet d'adapter avec précision la résistance de l'agrafe de fixation à l'effort d'arrachement et avec des pièces de faibles dimensions, d'assurer un maintien efficace.
- pour chaque charnière, ladite ouverture radiale est désaxée par rapport à l'axe d'ancrage de ladite portée, perpendiculairement à ladite direction principale, ladite tige est portée par un bras rigide désaxé par rapport à l'axe de maintien de ladite tige perpendiculairement à ladite direction principale de sorte qu'après engagement, lesdites ouvertures radiale et lesdits bras sont répartis de part et d'autre desdits axes desdites charnières. Cette configuration particulière permet de renforcer le maintien de l'agrafe de fixation dans sa configuration engagée.
- lesdits axes desdites charnières sont prévus à des hauteurs différentes selon ladite direction principale,
- lesdites tiges sont portées par ledit élément de maintien et lesdites portées sont portées par ledit élément d'ancrage,
- lesdites portées comportent une portion rigide et une portion élastiquement déformable, ladite portion rigide s'étendant sur au moins un quart du cylindre définissant ladite portée, ladite portion élastiquement déformable s'étendant sur au moins la moitié dudit cylindre définissant ladite portée,
- ledit élément d'ancrage comporte des premier et second montants latéraux rigides prévus de part et d'autres desdites portées et définissant lesdites portions rigides,
- ledit second montant latéral, adjacent à ladite sangle, définit une première surface d'appui apte à recevoir, après engagement desdites tiges dans lesdites portées, une seconde surface d'appui dudit élément de maintien, lesdits élément d'ancrage et élément de maintien définissent respectivement dans leurs zones médianes, des troisième et quatrième surfaces d'appui aptes, après ledit engagement, à être en appui l'une avec l'autre.
- l'agrafe de fixation comporte au moins une butée prévue sur l'un au moins desdits élément d'ancrage, élément de maintien, ladite butée étant apte, après ledit engagement, à coopérer respectivement avec ledit élément de maintien, ledit élément d'ancrage, pour bloquer la translation relative entre lesdits élément d'ancrage et élément de maintien parallèlement audit axes desdites charnières.

L'invention s'étend à un assemblage d'une pièce sur un support au moyen d'une agrafe de fixation, caractérisé en ce qu'il comporte une agrafe de fixation telle que décrite précédemment.

Dans la présente demande les termes premier, second et suivants ne sont utilisés que pour différencier les éléments entre eux.

### Description sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1 est une vue en perspective de l'agrafe de fixation selon l'invention illustrée en position ouverte ;
- la figure 2 est une vue partielle de coté de l'agrafe de fixation de la figure 1 en position ouverte ;
- la figure 3 est une vue de coté de l'agrafe de fixation des figures précédentes, illustrée en position fermée et coopérant avec un support et une pièce d'habillage ;
- la figure 4 est une vue agrandie de détail de la zone A de la figure 3.

### Description des modes de réalisation

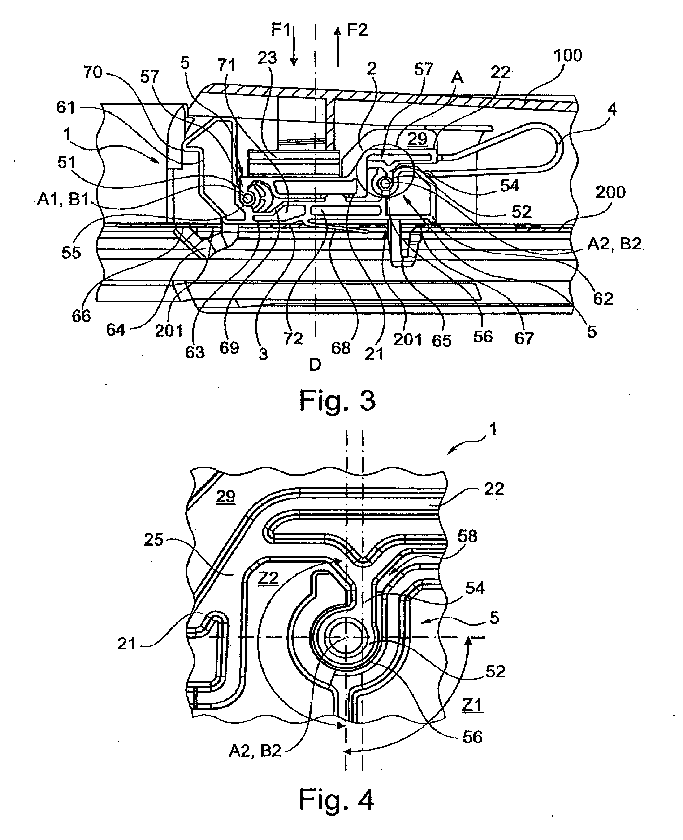

En référence aux figures, l'agrafe de fixation 1 selon l'invention permet, sous l'effet d'un effort d'engagement F1 prédéterminé (symbolisé par une flèche sur la figure 3), de solidariser une pièce 100 sur un support 200. Ainsi, l'agrafe de fixation 1 permet d'assurer un maintien efficace et solide de la pièce 100 en contact sur le support 200. L'agrafe de fixation 1 permet que la pièce 100 puisse être désengagée du support 200, lorsqu'elle est soumise à un effort de désengagement F2 prédéterminé (symbolisé par une flèche sur la figure 3). Les efforts d'engagement F1 et de désengagement F2 sont appliqués selon une direction principale D (symbolisée par un trait mixte fin sur la figure 3). L'agrafe de fixation 1 est monobloc et, après désengagement, la pièce 100 reste reliée au support 200. Ainsi, à tout moment d'utilisation, tous les éléments qui constituent l'agrafe de fixation 1 restent liés les uns aux autres. L'agrafe de fixation 1 est particulièrement utile pour le maintien de pièce d'habillage recouvrant un airbag sur une carrosserie, l'airbag étant dissimulé derrière la pièce d'habillage.

L'agrafe de fixation 1 selon l'invention est monobloc et comporte un élément de maintien 2 et un élément d'ancrage 6 reliés par une sangle 4. L'élément de maintien 2 et l'élément d'ancrage 6 sont par ailleurs pourvus de moyens de couplage 5 en partie rigide et en partie élastiquement déformables. Ces moyens de couplage 5 sont aptes, sous l'effet d'un effort d'engagement F1, appliqué selon la direction principale D prédéterminée, à s'engager mutuellement pour solidariser entre eux l'élément de maintien 2 et l'élément d'ancrage 6. De plus, ces moyens de couplage 5 sont aptes, sous l'effet d'un effort de désengagement F2 prédéterminé, appliqué selon la direction principale D prédéterminée, à dégager l'élément de maintien 2 de l'élément d'ancrage 6. L'agrafe de fixation 1 peut être réalisée en matière plastique ou tout autre matériau adapté.

L'élément de maintien 2 comporte un premier corps 20, une première et une seconde tiges 51, 52 sensiblement cylindriques ayant respectivement un premier et un second axe de maintien A1, A2, sensiblement parallèles entre eux. Dans l'exemple illustré, les première et seconde tiges 51, 52 sont creuses. Elles peuvent bien entendu être pleines. Le premier corps 20 est formé par un premier et un second profilés 21, 22, rectangulaires, creux, rigides, reliés entre eux par un pan incliné 25 rigide. Ainsi, les premier et second profilés 21,22 s'étendent respectivement dans des premier et second plans de maintien P1, P2 sensiblement parallèles entre eux, décalés l'un de l'autre, et sensiblement parallèles aux premier et second axes de maintien A1 et A2. Le premier corps 20 peut bien entendu être réalisé de toute autre manière adaptée rigide et non déformable.

Le premier profilé 21 comporte un mors 23 formé par deux formes en L sensiblement parallèles disposées en regard l'une de l'autre, dont les grandes barres sont reliées au premier profilé 21, et dont les petites barres se font face afin de délimiter, entre les formes en L, une rainure 24 apte à recevoir une forme en T de la pièce 100, complémentaire à la rainure 24. La rainure 24 s'étend perpendiculairement aux premier et second axes de maintien A1, A2 et sensiblement parallèlement aux premier et second plans de maintien P1, P2. Afin d'autoriser l'insertion de la forme en T de la pièce 100, la rainure 24 débouche de part et d'autre du mors 23. Le mors 23, ou de manière générale les moyens de maintien de la pièce 100 sur l'élément de maintien 2, peuvent bien entendu être différents. Le premier profilé 21 et la première tige 51 sont reliés entre eux par un premier bras 53 rigide. Dans l'exemple illustré, une première grande paroi 26 du premier profilé 21 est prolongée, dans son alignement, par une rallonge 27, de l'extrémité libre de laquelle s'étend le premier bras 53. Le premier bras 53 s'étend ainsi sur le coté et dans l'épaisseur du premier profilé 21 sensiblement perpendiculairement au premier plan de maintien P1. L'autre extrémité du premier bras 53 est raccordée à la première tige 51 de sorte que le premier bras 53 soit sensiblement tangent à la première tige 51 et que la première tige 51 soit ainsi désaxée, dans le premier plan de maintien P1, par rapport au premier bras 53, vers le premier profilé 21. La seconde grande paroi 28 du premier profilé définit une quatrième surface d'appui S4 apte, après engagement, à recevoir l'appui de la d'une troisième surface d'appui S3 portée par l'élément d'ancrage 6 et décrite plus loin.

Le second profilé 22 et le pan incliné 25 sont prolongés par un flanc d'appui 29 qui s'étend sensiblement perpendiculairement au second plan de maintien P2, le long d'un des bords du second profilé 22 et du pan incliné 25, ce bord étant sensiblement perpendiculaire aux premier et second axes de maintien A1, A2. Le flanc d'appui 29 permet de renforcer la rigidité de l'élément de maintien 2. Le second profilé 22 et la seconde tige cylindrique 52 sont reliés entre eux par un second bras 54 rigide. Dans l'exemple illustré, une seconde grande paroi 30 du second profilé 22 est prolongée, dans sa partie médiane, par le second bras 54 qui s'étend, à l'opposé du flanc de maintien 29, sensiblement perpendiculairement au second plan de maintien P2. Les premier et second profilés 21, 22 sont décalés l'un par rapport à l'autre de sorte que la seconde grande paroi 30 du second profilé 22 est décalée par rapport à la première grande paroi 28 du premier profilé 21 et située au-delà de l'épaisseur du premier profilé 21. Ainsi, le second bras 54 s'étend sur le coté et dans l'épaisseur du premier profilé 21. L'extrémité du second bras 54 est raccordée à la seconde tige 52 de sorte que le second bras 54 soit sensiblement tangent à la seconde tige 52 et que la seconde tige 52 soit ainsi désaxée, dans le second plan de maintien P2, par rapport au second bras 54 vers le premier profilé 21. Ainsi, les première et seconde tiges 51, 52 sont orientées l'une vers l'autre alors que les premier et second bras 53, 54 sont orientés à l'opposé l'un de l'autre par rapport aux premier et second axes de maintien A1, A2. Les premier et second axes de maintien A1, A2 sont par ailleurs décalés l'un par rapport à l'autre dans la direction principale D. Selon cette direction principale D, le premier axe de maintien A1 de la première tige 51 est plus éloigné que le second axe de maintien A2 de la seconde tige 52 par rapport au second plan de maintien P2. Le second profilé 22 est raccordé à une extrémité de la sangle 4. La partie de la seconde grande paroi 30 du second profilé 22, disposée au-delà du second bras 54 par rapport au premier bras 53, forme une seconde surface d'appui S2 destinée à venir en appui contre une première surface d'appui S1 portée par l'élément d'ancrage 6 et décrite plus loin. Cette seconde surface d'appui S2 est sensiblement parallèle aux premiers et seconds plans de maintien P1, P2.

Le premier corps 20, les premier et second bras 53, 54 et les première et seconde tiges 51, 52 forment ainsi un élément de maintien 2 rigide, non déformable. Les première et seconde tiges 51, 52, et les premier et second bras 53, 54 forment en partie les moyens de couplage 5.

La sangle 4 est souple et déformable pour permettre le rapprochement et l'éloignement libre de l'élément de maintien 2 par rapport à l'élément d'ancrage 6. Une des extrémités de la sangle 4 est raccordée à l'élément de maintien 2 par l'intermédiaire de son second profilé 22 (tel que décrit précédemment), l'autre extrémité est raccordée à l'élément d'ancrage 3 par l'intermédiaire de son second montant latéral 62 (tel que décrit ci-après)

L'élément d'ancrage 6 comporte un second corps 60, une première et une seconde portées 55, 56 sensiblement cylindriques ayant des premier et second axes d'ancrage B1, B2, sensiblement parallèles entre eux. Le second corps 60 est formé par un premier et un second montants latéraux 61, 62, rigides, séparés par un profilé intermédiaire 63, également rigide. Les premiers et second montants latéraux 61, 62 et le profilé intermédiaire 63 s'étendent chacun sensiblement parallèlement aux premier et second axes d'ancrage B1, B2 et forment en partie l'élément d'ancrage 6, cette partie étant rigide et non déformable. Le second corps 60 définit, à l'opposé des première et seconde portées cylindriques 55, 56, un plan d'ancrage P (représenté par une ligne mixte fin sur la figure 6) destiné à venir en appui contre le support 200 lors de la fixation de l'élément d'ancrage 6 au support 200. Le second corps 60 comporte deux pattes d'ancrage 64, 65 en V, s'étendant du plan d'ancrage P à l'opposé des première et seconde portées 55,56. La patte d'ancrage 64 est prévue rigide et la patte d'ancrage 65 élastiquement déformable. Ainsi, comme illustré par la figure 3, ces pattes d'ancrage 64, 65 peuvent être insérées dans des orifices 201 traversant une paroi du support 200. La patte d'ancrage 64 est insérée dans un orifices 201 de sorte à servir de point de maintien rigide alors que la patte d'ancrage 65 est insérée et escamotable par déformation élastique. Chaque patte d'ancrage 64, 65 comporte une première extrémité solidaire de l'élément d'ancrage 6 et une seconde extrémité, libre, destinée à être en appui élastique sous la paroi du support 200 pour assurer le maintien de l'élément d'ancrage 6 sur le support 200. Pour favoriser ce maintien, les extrémités libres sont orientées à l'opposé l'une de l'autre et pourvues d'aplats 66, 67 sensiblement parallèles au plan d'appui P après engagement. Le second corps 60 est de plus pourvu, entre ses pattes d'ancrage 64, 65, d'une languette flexible 68 destinée à appliquer un effort élastique sur la face de la paroi du support 200 opposée à celle en contact avec les pattes d'ancrage 64, 65. Ainsi, la languette flexible 68 tend à éloigner l'élément d'ancrage 6 du support 200 de sorte à plaquer les aplats 66, 67 des extrémités libres des pattes d'ancrage 64, 65 contre la paroi du support 200.

Les première et seconde portées 55, 56 de l'élément d'ancrage 6 sont destinées à coopérer avec la première et la seconde tige 51, 52 de l'élément de maintien 2 pour former des charnières d'axes sensiblement parallèles. Ces charnières s'étendent sur une largeur de plusieurs centimètres. Les première et seconde portées 55,56 forment en partie les moyens de couplage 5. Pour ce faire, les premier et second axes de maintien A1, A2 et les premier et second axes de maintien B1, B2 ont le même entraxe. Chaque première et seconde portée 55, 56 comporte une portion rigide Z1 (représentée sur la figure de détail 4), prolongée par une portion élastiquement déformable Z2 (représentée sur la figure de détail 4) formée par une paroi élastiquement déformable 58, 59, et est par ailleurs pourvue d'une ouverture radiale 57. Chaque ouverture radiale 57 présente des dimensions inférieures à celles de la tige 51, 52 permettant d'empêcher l'engagement et le désengagement de la tige 51, 52 dans la portée 55, 56 correspondante sans déformation élastique de la paroi élastiquement déformable 58, 59. Les ouvertures radiales 57 sont orientées dans des directions sensiblement parallèles et définissent ainsi la direction principale D, sensiblement perpendiculaire aux premier et second axes d'ancrage B1, B2 et au plan d'ancrage P. La portion rigide Z1 s'étend sur au moins un quart du cylindre définissant la portée 55, 56 et la portion élastiquement déformable Z2 s'étend sur au moins la moitié du cylindre définissant la portée 55, 56. Ainsi, la portée 55, 56 s'étend sur au moins les trois quarts du cylindre la définissant. La construction particulière de la portée 55, 56 permet de la dimensionner au plus juste de sorte que l'effort d'engagement F1 ne soit pas trop important et que le désengagement soit obtenu avec efficacité dès que l'effort de désengagement F2 prédéterminé est atteint. Les paroi élastiquement déformable 58, 59 se font face et sont disposées entre les portions rigides Z1. Chaque paroi élastiquement déformable 58, 59 est apte, lorsqu'elle est soumise à un effort d'engagement F1 ou de désengagement F2 de la tige 51, 52 par rapport à la portée cylindrique 55, 56, à se déformer élastiquement pour augmenter provisoirement les dimensions de l'ouverture radiale 57 et autoriser respectivement l'engagement ou le désengagement de la tige 51, 52. Les parois élastiquement déformables 58,59 peuvent être déformable sur l'ensemble de leur surface et/ou définir avec la portion rigide Z1 un point de flexion par rapport auquel elles se déforment.

Le profilé intermédiaire 63 relie les premier et second montants latéraux 61, 62 et en particulier, les première et seconde portées 55, 56. Il comporte deux évidements 71, 72 s'étendant sensiblement parallèlement aux premier et second axes d'ancrage B1, B2. Le profilé intermédiaire 63 forme un décrochement 69 permettant le décalage des premier et second axes d'ancrage B1, B2 l'un par rapport à l'autre selon la direction principale D. Selon cette direction principale D, le second axe d'ancrage B2 est plus éloigné que le premier axe d'ancrage B1 par rapport au plan d'appui P. Par ailleurs, le profilé intermédiaire 63 porte la languette flexible 68. A l'opposé de la languette flexible 68, le profilé intermédiaire 63 définit la troisième surface d'appui S3 apte, après engagement, à recevoir l'appui de la quatrième surface d'appui S4 définit par l'élément de maintien 2.

Le premier montant latéral 61 est prévu à l'opposé de la sangle 4 et à l'opposé de la languette flexible 68. Il est formé par un troisième profilé creux, dont la paroi orientée vers le profilé intermédiaire 63 forme la portion rigide Z2 de la première portée 55. Par ailleurs, la première patte d'ancrage 64 s'étend de la base du premier montant latéral 61, dans la même direction que la languette flexible 68 par rapport au plan d'appui P. Enfin, le premier montant latéral 61 forme un bec 70 s'étendant sensiblement parallèlement au plan d'appui P, à l'opposé du second montant latéral 62.

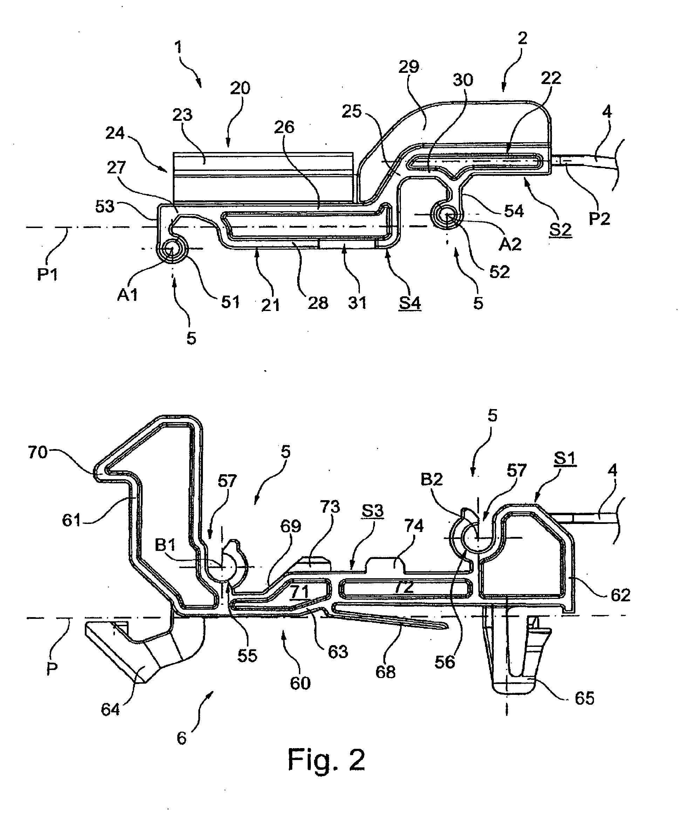

Le second montant latéral 62 est raccordé à la sangle 4 et prévu entre la sangle 4 et le profilé intermédiaire 63. Il est prévu du même coté que rapport à la languette flexible 68 par rapport à l'élément d'ancrage 6. La paroi du second montant latéral 62 orientée vers le premier montant latéral 61 forme la portion rigide Z2 de la seconde portée cylindrique 56. Par ailleurs, la seconde patte d'ancrage 65 s'étend de la base du second montant latéral 62, dans la même direction que la languette flexible 68 par rapport au plan d'appui P. Comme il ressort des figures 2 et 3, le V formé par la première patte d'ancrage 64 est plus ouvert que celui formé par la seconde patte d'ancrage 65. De plus, le second montant latéral 62 forme, au-delà de la seconde portée 56 par rapport à la première portée 55, la première surface d'appui S1 destinée à recevoir l'appui de la seconde surface d'appui S2 portée par l'élément de maintien 2 et décrite précédemment. Cette première surface d'appui S1 est sensiblement parallèle au plan d'appui P.

Selon une variante de réalisation non représentée, les portions rigides des portées cylindriques ne sont pas formées par les premier et second montants latéraux mais par des éléments additionnels.

Selon une autre variante de réalisation non représentée, l'élément de maintien et l'élément d'ancrage comportent chacun une tige cylindrique et une portée cylindrique. Selon une autre variante de réalisation non représentée, l'élément de maintien comporte les deux portées cylindriques et l'élément d'ancrage comporte les deux tiges cylindriques.

De manière générale, les formes en regard de l'élément de maintien 2 et de l'élément d'ancrage 6 sont sensiblement complémentaires et permettent, après engagement, d'assurer un contact maximal entre l'élément de maintien 2 et de l'élément d'ancrage 6 et d'occuper un espace limité.

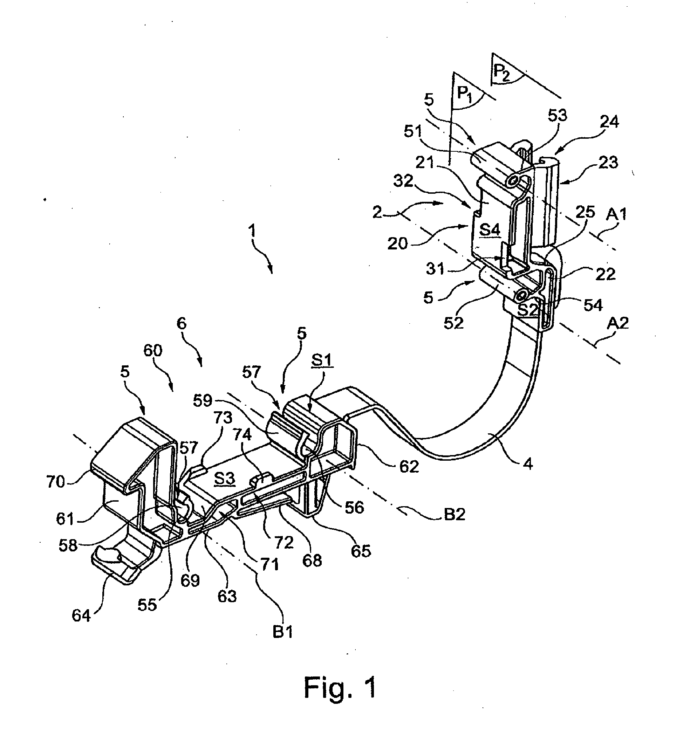

L'élément de maintien 2 et l'élément d'ancrage 6 sont par ailleurs pourvus de butées 73,74, bloquant, après engagement, la translation relative, entre l'élément de maintien 2 et l'élément d'ancrage 6, perpendiculairement à la direction principale D. Dans l'exemple illustré, les bords de l'élément intermédiaire 63 sont pourvus des butées 73, 74. Les butées 73, 74 s'étendent à l'opposé de la languette flexible 68, dans la direction principale D et perpendiculairement aux premier et second axes d'ancrage B1, B2. Ces butées 73, 74 sont décalées l'une par rapport à l'autre l'une étant plus proche du premier axe d'ancrage B1, l'autre étant plus proche du second axe d'ancrage B2. Le premier profilé 21 de l'élément de maintien 2 comporte des décrochements 31, 32 (visibles sur la figure 1) aptes, une fois l'engagement réalisé, à recevoir les butées 73, 74 de sorte que ces dernières soient en appui contre les bords opposés de l'élément de maintien 2 dans la direction des premier et second axes de maintien A1, A2. Ainsi, après engagement, la translation relative de l'élément de maintien 2 par rapport à l'élément d'ancrage 6 dans cette même direction est rendue impossible. Les décrochements 31,32 permettent par ailleurs que les butées 73, 74 ne dépassent pas latéralement de l'agrafe de fixation 1. Après engagement, l'agrafe de fixation 1 s'inscrit ainsi dans un rectangle facilement logeable entre la pièce 100 et le support 200. Selon une variante de réalisation non représentée, l'agrafe de fixation peut comporter une seule butée ou plusieurs butées configurées différemment.

Il est possible d'utiliser une ou plusieurs agrafes de fixation 1 selon l'invention pour solidariser une pièce 100 sur un support 200. Les étapes d'engagement et de désengagement décrites ci-après sont centrées sur l'utilisation d'une agrafe de fixation 1 unique et pourront être adaptées sans difficultés par un Homme du métier pour l'utilisation de plusieurs agrafes de fixation. L'agrafe de fixation 1 est avantageusement utilisée dans un véhicule pour solidariser une pièce d'habillage prévue au-dessus d'un airbag à un support intégré à la carrosserie. La description qui suit est basée sur cet exemple d'utilisation.

Pour mettre en place l'agrafe de fixation 1 selon l'invention on procède aux étapes de montage suivantes. On solidarise la pièce 100 à l'élément de maintien 2 en insérant la forme en T de la pièce 100 dans le mors 23 de l'élément de maintien 2 par l'une des extrémités de la rainure 24. On solidarise l'élément d'ancrage 6 au support 200 en insérant successivement ou simultanément les première et seconde pattes d'ancrage 64, 65 dans les orifices 201 prévus dans la paroi du support 200. Ces étapes de solidarisation peuvent bien entendu être réalisées dans l'ordre inverse en commençant par la solidarisation de l'élément d'ancrage 6 au support 200 et en poursuivant par la solidarisation de la pièce 100 à l'élément de maintien 2. Ensuite, on réalise l'engagement de l'élément de maintien 2 dans l'élément d'ancrage 6 en engageant successivement ou simultanément les première et seconde tiges 51, 52 dans les première et seconde portées 55, 56. Pour ce faire, on dispose les première et seconde tiges 51, 52 respectivement en regard des première et seconde ouvertures radiales 57, et on applique un effort d'engagement F1 sur l'élément de maintien 2 vers l'élément d'ancrage 6. On applique cet effort d'engagement F1 selon la direction principale D définit par les premières et secondes ouvertures radiales 57. Cette direction principale D est sensiblement perpendiculaire au plan d'appui P mais non perpendiculaire au plan passant par les premier et second axes d'ancrage B1, B2. L'effort d'engagement F1 est appliqué jusqu'à provoquer la déformation des première et seconde parois élastiquement déformables 58, 59 et obtenir l'insertion des première et seconde tiges 51,52 respectivement dans les première et seconde portées 55, 56. Selon une variante de mise en oeuvre, on peut solidariser l'élément de maintien 2 à la pièce 100, réaliser l'engagement entre l'élément de maintien 2 et l'élément d'ancrage 6 et ensuite solidariser l'ensemble au support 200. En cas d'effort d'engagement F1 excessif ou prolongé, les seconde et quatrième surfaces d'appui S2, S4 entrent en contact respectivement avec les première et troisième surfaces d'appui S1, S3. Ainsi, les premières et secondes tiges 51, 52 et portées 55, 56 formant les charnières ne sont pas sollicitées de manière excessive.

Une fois l'engagement réalisé, on obtient, comme illustré par les figures 3 et 4, un assemblage rigide de la pièce 100 sur le support 200 par l'intermédiaire de l'agrafe de fixation 1 selon l'invention. Les premier et second axes de maintien A1, A2 et les premier et second axes d'ancrage B1, B2 sont coaxiaux. Comme détaillé par la figure 4, chaque première, seconde tige 51, 52 et chaque première, seconde portée 55, 56 correspondante sont alors en contact l'une avec l'autre sur au moins les trois quarts du cylindre qu'elles définissent. Au moins un quart de ce cylindre est occupé par la portion rigide Z1 de la portée cylindrique et la moitié de ce cylindre est occupé par la portion élastiquement déformable Z2. De plus, pour chaque charnière, l'ouverture radiale 57 et le bras 53, 54 portant la tige 51, 52 sont désaxés par rapport à l'axe de la charnière correspondante, perpendiculairement à la direction principale D, et à l'opposé les unes des autres d'une charnière à l'autre. Cette construction particulière et la surface le long de laquelle le contact entre les première, seconde tiges cylindriques et les première, seconde portées cylindriques est assuré, permet aux charnières de résister de manière efficace et contrôlée à tout effort de désengagement n'atteignant pas la valeur prédéterminée. De plus, les axes des charnières sont à des distances différentes par rapport au plan d'appui P et les charnières sont indépendantes l'une de l'autre si bien qu'en cas de désengagement intempestif de l'une des charnières, l'autre charnière est toujours engagée pour maintenir la pièce 100 sur le support 200, la charnière encore engagée faisant alors office de pivot. Après engagement, l'airbag est protégé par la pièce 100, qui le recouvre de sorte à ce qu'il ne soit pas visible.

En condition normale d'utilisation, la pièce 100 est sécurisée de manière fixe sur le support 200 par l'intermédiaire des charnières et protège ainsi l'airbag tout en le dissimulant.

En cas d'accident, l'airbag se gonfle et applique sur l'élément de maintien 2 un effort de désengagement F2 tendant à l'éloigner de l'élément d'ancrage 6 et provoquant le désengagement des charnières. L'airbag est généralement disposé pour que cet effort de désengagement F2 soit appliqué selon la direction principale D. De même, si l'on souhaite démonter la pièce 100, pour par exemple la changer ou changer l'airbag situé dessous, on réalise le désengagement de l'élément de maintien 2 par rapport à l'élément d'ancrage 6 en appliquant un effort de désengagement F2 similaire à celui de l'airbag se gonflant. On applique cet effort de désengagement F2 selon la direction principale D définit par les premières et secondes ouvertures radiale 57. L'effort de désengagement F2 est appliqué jusqu'à provoquer la déformation des première et seconde parois élastiquement déformables 58, 59 et obtenir le désengagement des première et seconde tiges 51, 52 respectivement des première et seconde portées 55, 56. Après désengagement, la pièce 100 reste solidaire de l'élément de maintien 2 par l'intermédiaire du mors 23 et le support 200 reste solidaire de l'élément d'ancrage 6 par l'intermédiaire des première et seconde pattes d'ancrage 64, 65. L'élément de maintien 2 et l'élément d'ancrage 6 restant liés de manière souple l'un à l'autre par la sangle 4, la pièce 100 ne se transforme pas en projectile dangereux.

## Revendications

1. Agrafe de fixation (1) d'une pièce (100) sur un support (200), ladite agrafe de fixation (1) étant monobloc et comportant au moins un élément d'ancrage (6) et un élément de maintien (2) destinés à être solidarisés respectivement audit support (200) et à ladite pièce (100), ledit élément d'ancrage (6) et ledit élément de maintien (2) étant pourvus de moyens de couplage (51 , 52, 55, 56) comportant au moins une portion élastiquement déformable (Z2) apte, sous l'effet d'efforts d'engagement (F1) et de désengagement (F2) prédéterminés appliqués selon une direction principale (D), à se déformer pour respectivement autoriser l'engagement et la solidarisation mutuels dudit élément d'ancrage (6) audit élément de maintien (2) et leur désengagement, ledit élément d'ancrage (6) et ledit élément de maintien (2) étant, avant engagement, après engagement et après désengagement, reliés entre eux par une sangle (4) distincte desdits moyens de couplage (51, 52, 55, 56), **caractérisée en ce que** lesdits moyens de couplage comportent au moins deux charnières d'axes (A 1, A2, B1, B2) sensiblement parallèles entre eux, chaque charnière comportant au moins une tige (51 , 52) cylindrique non déformable, et au moins une portée (55, 56) cylindrique pourvue d'une ouverture radiale (57) et comportant ladite portion élastiquement déformable (Z2).

2. Agrafe de fixation (1) selon la revendication précédente, **caractérisée en ce que** pour chaque charnière, ladite tige (51, 52) et ladite portée (55, 56) sont agencées pour, une fois l'engagement réalisé, coopérer sur au moins les trois quarts du cylindre qui les définit pour résister audit effort de désengagement (F2).

3. Agrafe de fixation (1) selon au moins l'une des revendications précédentes, **caractérisée en ce que** pour chaque charnière, ladite ouverture radiale (57) est désaxée par rapport à l'axe d'ancrage (B1, B2) de ladite portée (55, 56), perpendiculairement à ladite direction principale (D), **en ce que** ladite tige (51 , 52) est portée par un bras (53, 54) rigide désaxé par rapport à l'axe de maintien de ladite tige (51 , 52) perpendiculairement à ladite direction principale (0) de sorte qu'après engagement, lesdites ouvertures radiale (57) et lesdits bras (53, 54) sont répartis de part et d'autre desdits axes (A 1, A2, B1, B2) desdites charnières.

4. Agrafe de fixation (1) selon la revendication 3, **caractérisée en ce que** lesdits axes (A1, A2, B1, B2) desdites charnières sont prévus à des hauteurs différentes selon ladite direction principale (D).

5. Agrafe de fixation (1) selon au moins l'une des revendications précédentes, **caractérisée en ce que** lesdites tiges (51, 52) sont portées par ledit élément de maintien (2) et que lesdites portées (55, 56) sont portées par ledit élément d'ancrage (6).

6. Agrafe de fixation (1) selon au moins l'une des revendications précédentes, caractérisée en ce en ce que lesdites portées (55, 56) comportent une portion rigide (Z1) et une portion élastiquement déformable (Z2), en ce que ladite portion rigide (Z2) s'étend sur au moins un quart du cylindre définissant ladite portée (55, 56) et en ce que ladite portion élastiquement déformable (Z2) s'étend sur au moins la moitié dudit cylindre définissant ladite portée (55, 56).

7. Agrafe de fixation (1) selon au moins l'une des revendications précédentes, **caractérisée en ce que** ledit élément d'ancrage (6) comporte des premier et second montants latéraux (61, 62) rigides prévus de part et d'autres desdites portées (55, 56) et définissant lesdites portions rigides (Z1).

8. Agrafe de fixation (1) selon la revendication 7, **caractérisée en ce que** ledit second montant latéral (62), adjacent à ladite sangle (4), définit une première surface d'appui (S1) apte à recevoir, après engagement desdites tiges (51, 52) dans lesdites portées (55, 56), une seconde surface d'appui (S2) dudit élément de maintien (2), et **en ce que** lesdits élément d'ancrage (6) et élément de maintien (2) définissent respectivement dans leurs zones médianes, des troisième et quatrième surfaces d'appui (S3, S4) aptes, après ledit engagement, à être en appui l'une avec l'autre.

9. Agrafe de fixation (1) selon au moins l'une des revendications précédentes, **caractérisée en ce qu'**elle comporte au moins une butée (73, 74) prévue sur l'un au moins desdits élément d'ancrage (6), élément de maintien (2), ladite butée (73, 74) étant apte, après engagement desdites tiges (51, 52) dans lesdites portées (55, 56), à coopérer respectivement avec ledit élément de maintien (2), ledit élément d'ancrage (6), pour bloquer la translation relative entre lesdits élément d'ancrage (6) et élément de maintien (2) parallèlement au dit axes (A1, A2, B1, B2) desdites charnières.

10. Assemblage d'une pièce (100) sur un support (200) au moyen d'une agrafe de fixation (1), **caractérisé en ce qu'**il comporte une agrafe de fixation (1) selon au moins l'une quelconque des revendications précédentes.

## Patentansprüche

1. Klammer zur Befestigung (1) einer Komponente (100) an einem Träger (200), wobei die Klammer (1) zur Befestigung einstückig ist und mindestens ein Verankerungselement (6) und ein Halteelement (2) umfasst, die dazu bestimmt sind, mit dem Träger (200) bzw. der Komponente (100) verbunden zu werden, wobei das Verankerungselement (6) und das Halteelement (2) mit Kopplungsmitteln (51, 52, 55, 56) versehen sind, umfassend mindestens einen elastisch verformbaren Abschnitt (Z2), der geeignet ist, sich unter der Wirkung von vorbestimmten Einrück- (F1) und Ausrückkräften (F2), die in eine Hauptrichtung (D) angelegt werden, zu verformen, um jeweils das gegenseitige Einrücken und die Verbindung des Verankerungselements (6) mit dem Halteelement (2) und ihr Ausrücken zu gestatten, wobei das Verankerungselement (6) und das Halteelement (2) vor dem Einrücken, nach dem Einrücken und nach dem Ausrücken miteinander durch einen von den Kopplungsmitteln (51, 52, 55, 56) getrennten Gurt (4) verbunden sind, **dadurch gekennzeichnet, dass** die Kopplungsmittel mindestens zwei Scharniere mit im Wesentlichen zueinander parallelen Achsen (A1, A2, B1, B2) umfassen, wobei jedes Scharnier mindestens eine nicht verformbare zylindrische Stange (51, 52) und mindestens eine zylindrische Fläche (55, 56) umfasst, die mit einer radialen Öffnung (57) versehen ist und den elastisch verformbaren Abschnitt (Z2) umfasst.

2. Klammer zur Befestigung (1) nach dem vorhergehenden Anspruch, **dadurch gekennzeichnet, dass** für jedes Scharnier die Stange (51, 52) und die Fläche (55, 56) derart angeordnet sind, dass sie, wenn das Einrücken erfolgt ist, auf mindestens drei Viertel des Zylinders, der sie definiert, zusammenwirken, um der Ausrückkraft (F2) zu widerstehen.

3. Klammer zur Befestigung (1) nach mindestens einem der vorhergehenden Ansprüche, **dadurch gekennzeichnet, dass** für jedes Scharnier die radiale Öffnung (57) in Bezug zur Verankerungsachse (B1, B2) der Fläche (55, 56) senkrecht auf die Hauptrichtung (D) achsversetzt ist, dass die Stange (51, 52) von einem starren Arm (53, 54) getragen wird, der in Bezug zur Halteachse der Stange (51, 52) senkrecht auf die Hauptrichtung (0) achsversetzt ist, so dass nach dem Einrücken die radialen Öffnungen (57) und die Arme (53, 54) beiderseits de Achsen (A1, A2, B1, B2) der Scharniere verteilt sind.

4. Klammer zur Befestigung (1) nach Anspruch 3, **dadurch gekennzeichnet, dass** die Achsen (A1, A2, B1, B2) der Scharniere auf unterschiedlichen Höhen entlang der Hauptrichtung (D) vorgesehen sind.

5. Klammer zur Befestigung (1) nach mindestens einem der vorhergehenden Ansprüche, **dadurch gekennzeichnet, dass** die Stangen (51, 52) von dem Halteelement (2) getragen werden, und dass die Flächen (55, 56) von dem Verankerungselement (6) getragen werden.

6. Klammer zur Befestigung (1) nach mindestens einem der vorhergehenden Ansprüche, **dadurch gekennzeichnet, dass** die Flächen (55, 56) einen starren Abschnitt (Z1) und einen elastisch verformbaren Abschnitt (Z2) umfassen, dass sich der starre Abschnitt (Z2) auf mindestens einem Viertel des Zylinders, der die Fläche (55, 56) definiert, erstreckt, und dass sich der elastisch verformbare Abschnitt (Z2) auf mindestens der Hälfte des Zylinders, der die Fläche (55, 56) definiert, erstreckt.

7. Klammer zur Befestigung (1) nach mindestens einem der vorhergehenden Ansprüche, **dadurch gekennzeichnet, dass** das Verankerungselement (6) erste und zweite starre seitliche Ständer (61, 62) umfasst, die beiderseits der Flächen (55, 56) vorgesehen sind und die starren Abschnitte (Z1) definieren.

8. Klammer zur Befestigung (1) nach Anspruch 7, **dadurch gekennzeichnet, dass** der zweite seitliche Ständer (62), der an den Gurt (4) angrenzt, eine erste Stützfläche (S1) definiert, die geeignet ist, nach Einrücken der Stangen (51, 52) in die Flächen (55, 56) eine zweite Stützfläche (S2) des Halteelements (2) aufzunehmen, und dass das Verankerungselement (6) und das Halteelement (2) jeweils in ihrer Mittelzonen dritte und vierte Stützflächen (S3, S4) definieren, die geeignet sind, nach dem Einrücken aneinander anzuliegen.

9. Klammer zur Befestigung (1) nach mindestens einem der vorhergehenden Ansprüche, **dadurch gekennzeichnet, dass** sie mindestens einen Anschlag (73, 74) umfasst, der auf mindestens einem von Verankerungselement (6), Halteelement (2) vorgesehen ist, wobei der Anschlag (73, 74) geeignet ist, nach dem Einrücken der Stangen (51, 52) in die Flächen (55, 56) jeweils mit dem Halteelement (2), dem Verankerungselement (6) zusammenzuwirken, um die relative Translation zwischen den Verankerungselementen (6) und dem Halteelement (2) parallel zu den Achsen (A1, A2, B1, B2) der Scharniere festzustellen.

10. Anordnung einer Komponente (100) auf einem Träger (200) mit Hilfe einer Klammer zur Befestigung (1), **dadurch gekennzeichnet, dass** sie eine Klammer zur Befestigung (1) nach mindestens einem der vorhergehenden Ansprüche umfasst.

## Claims

1. Clip (1) for fixing a component (100) to a support (200), said fixing clip (1) being in one piece and including at least an anchoring element (6) and a retaining element (2) intended to be fastened to said support (200) and to said component (100), respectively, said anchoring element (6) and said retaining element (2) being provided with coupling means (51, 52, 55, 56) including at least one elastically deformable portion (Z2) adapted to be deformed by a predetermined engagement force (F1) and a predetermined disengagement force (F2) applied in a principal direction (D) to allow engagement and fastening together of said anchoring element (6) and said retaining element (2) and disengagement thereof, respectively, said anchoring element (6) and said retaining element (2) being, before engagement, after engagement and after disengagement, connected to each other by a strap (4) separate from said coupling means (51, 52, 55, 56), **characterised in that** said coupling means include at least two hinges with substantially parallel axes (A1, A2, B1, B2), each hinge including at least one non-deformable cylindrical rod (51, 52) and at least one cylindrical supporting surface (55, 56) provided with a radial opening (57) and including said elastically deformable portion (Z2).

2. Fixing clip (1) according to the preceding claim, **characterised in that**, for each hinge, said rod (51, 52) and said supporting surface (55, 56) are adapted, after engagement, to cooperate over at least three quarters of the cylinder that defines them to resist said disengagement force (F2).

3. Fixing clip (1) according to at least one of the preceding claims, **characterised in that**, for each hinge, said radial opening (57) is offset relative to the anchoring axis (B1, B2) of said supporting surface (55, 56) in a direction perpendicular to said principal direction (D) and **in that** said rod (51, 52) is carried by a rigid arm (53, 54) offset relative to the retaining axis from said rod (51, 52) in a direction perpendicular to said principal direction (D) so that, after engagement, said radial openings (57) and said arms (53, 54) are arranged on either side of said axes (A1, A2, B1, B2) of said hinges.

4. Fixing clip (1) according to claim 3, **characterised in that** said axes (A1, A2, B1, B2) of said hinges are at different heights in said principal direction (D).

5. Fixing clip (1) according to at least one of the preceding claims, **characterised in that** said rods (51, 52) are carried by said retaining element (2) and said supporting surfaces (55, 56) are carried by said anchoring element (6).

6. Fixing clip (1) according to at least one of the preceding claims, **characterised in that** said supporting surfaces (55, 56) include a rigid portion (Z1) and an elastically deformable portion (Z2), **in that** said rigid portion (Z2) extends over at least a quarter of the cylinder defining said supporting surface (55, 56), and **in that** said elastically deformable portion (Z2) extends over at least half of said cylinder defining said supporting surface (55, 56).

7. Fixing clip (1) according to at least one of the preceding claims, **characterised in that** said anchoring element (6) includes first and second rigid lateral uprights (61, 62) on either side of said supporting surfaces (55, 56) and defining said rigid portions (Z1).

8. Fixing clip (1) according to claim 7, **characterised in that** said second lateral upright (62) adjacent said strap (4) defines a first bearing surface (S1) adapted, after engagement of said rods (51, 52) in said supporting surfaces (55, 56), to receive a second bearing surface (S2) of said retaining element (2) and **in that** said anchoring element (6) and said retaining element (2) respectively define in their median areas third and fourth bearing surfaces (S3, S4) adapted, after said engagement, to bear on each other.

9. Fixing clip (1) according to at least one of the preceding claims, **characterised in that** it includes at least one abutment (73, 74) on said anchoring element (6) and/or said retaining element (2), said abutment (73, 74) being adapted, after engagement of said rods (51, 52) in said supporting surfaces (55, 56), to cooperate with said retaining element (2), said anchoring element (6), respectively, to block relative movement in translation between said anchoring element (6) and said retaining element (2) parallel to said axes (A1, A2, B1, B2) of said hinges.

10. Assembly of a component (100) onto a support (200) by means of a fixing clip (1), **characterised in that** it includes a fixing clip (1) according to at least any one of the preceding claims.
